# EUROPEAN PATENT APPLICATION

(11) **EP 4 703 434 A1**
(43) Date of publication of application: **04.03.2026**
(21) Application number: 24797070.0
(22) Date of filing: 24.04.2024
(51) Int. Cl.: C08L 101/00, C08J 5/18, C08K 3/04, C08K 3/013, C09J 7/30, C09J 11/04, C09K 21/02, E04B 1/94

(54) **THERMALLY-EXPANDABLE COMPOSITION AND THERMALLY-EXPANDABLE FIRE-RESISTANT SHEET**

(30) Priority: 25.04.2023 JP 2023071755; 22.09.2023 JP 2023157972
(71) Applicant: Sekisui Chemical Co., Ltd., Osaka-shi, Osaka 530-8565 (JP)
(72) Inventor: SHIMAMOTO, Michio, Tokyo 105-8566 (JP)
(74) Representative: Ter Meer Steinmeister & Partner
(86) International application number: PCT/JP2024/016094
(87) International publication number: WO 2024/225324

(57) **Abstract**

A thermally expandable composition of the present invention includes a matrix component and thermally expandable graphite, and the matrix component is at least one adhesive selected from the group consisting of a dry-solidifying adhesive, a chemical-reactive adhesive, and a heat-melt adhesive. According to the present invention, a thermally expandable composition and a thermally expandable fire-resistant sheet that can maintain good heat resistance can be provided, even in the event of warping of fire prevention equipment during a fire.

## Description

### Technical Field

The present invention relates to a thermally expandable composition and a thermally expandable fire-resistant sheet.

### Background Art

In the field of construction, fire-resistant materials are used in fire prevention equipment such as doors and windows. Fire-resistant sheets and the like, in which inorganic fillers, thermally expandable graphite, and the like are blended in resins, are used as the fire-resistant materials (see e.g., PTL1). Such fire-resistant sheets expand when heated, to form fire-resistant insulating layers of combustion residues, thereby exhibiting fire-resistant insulating properties. Specifically, the fire-resistant sheets are installed in the gaps between doors and windows and the frames such as door frames and window frames surrounding them, and in the event of a fire, the sheets expand in a thickness direction, blocking the gaps and preventing the spread of fire.

### Citation List

### Patent Literature

PTL1: JP 2017-141463 A

### Summary of Invention

### Technical Problem

There has been a problem that fire prevention equipment such as doors and windows, when exposed to high temperatures for extended periods during a fire, experiences temperature differences between heated surfaces and non-heated surfaces, to occur warping deformation, the warping deformation causing the previously blocked heated surfaces and non-heated surface to penetrate, allowing the fire to spread and expand.

Therefore, an object of the present invention is to provide a thermally expandable composition and a thermally expandable fire-resistant sheet that can maintain good fire resistance even in the event of warping of fire prevention equipment during a fire.

### Solution to Problem

As a result of intensive studies, the present inventors have found that the above problem can be solved with a thermally expandable composition including a matrix component and thermally expandable graphite, and the matrix component being at least one adhesive selected from the group consisting of a dry-solidifying adhesive, a chemical-reactive adhesive, and a heat-melt adhesive. Namely, the present invention provides the following [1] to [13].
[1] A thermally expandable composition including a matrix component and thermally expandable graphite,
   the matrix component being at least one adhesive selected from the group consisting of a dry-solidifying adhesive, a chemical-reactive adhesive, and a heat-melt adhesive.
[2] The thermally expandable composition according to the above [1], further including an inorganic filler, wherein contents of the thermally expandable graphite and the inorganic filler are respectively 3 to 300 parts by mass and 2 to 200 parts by mass based on 100 parts by mass of the matrix component, and an expansion onset temperature of the thermally expandable graphite is lower than a decomposition onset temperature of the matrix component.
[3] The thermally expandable composition according to the above [1] or [2], wherein the matrix component includes at least one adhesive selected from the group consisting of a NBR epoxy resin-based, urea resin-based, melamine resin-based, phenolic resin-based, rubber-based, vinyl acetate resin-based, vinyl acetate copolymer resin-based, ethylene-vinyl acetate copolymer resin-based, acrylic resin-based, aqueous polymer-isocyanate-based, synthetic rubber latex-based, epoxy resin-based (non-modified), cyanoacrylate-based, polyurethane-based, silicone resin-based (non-modified), modified silicone resin-based, silylated urethane-based, polystyrene-based, and polyester-based adhesives.
[4] A thermally expandable fire-resistant sheet formed from the thermally expandable composition according to any one of the above [1] to [3].
[5] The thermally expandable fire-resistant sheet according to the above [4], having an expansion onset temperature of 160°C or less.
[6] The thermally expandable fire-resistant sheet according to the above [4] or [5], wherein an elution ratio is 3% or less after being immersed in pure water at 60°C for 1 week.
[7] The thermally expandable fire-resistant sheet according to any one of the above [4] to [6], wherein the matrix component is free of phosphorus components.
[8] The thermally expandable fire-resistant sheet according to any one of the above [4] to [7], including a substrate or a pressure-sensitive adhesive layer on at least one side of the sheet.
[9] The thermally expandable fire-resistant sheet according to any one of the above [4] to [8], being a wound body in which a thermally expandable fire-resistant sheet with a length of 1 m or more is wound.
[10] The thermally expandable fire-resistant sheet according to any one of the above [4] to [9], having a length of 1 m or more, a thermal shrinkage ratio of 1% or less in both MD and TD directions, a thickness of 0.5 mm or more, and a thickness variation of 0.1 mm or less.
[11] A method for producing a thermally expandable fire-resistant sheet, comprising solidifying, drying, or curing the thermally expandable composition according to any one of the above [1] to [3] to obtain a wound body with a length of 1 m or more.
[12] A method for producing a thermally expandable material-containing member, comprising applying the thermally expandable composition according to any one of the above [1] to [3] to a member, and then solidifying, drying, or curing the composition to obtain the thermally expandable material-containing member.
[13] Fire prevention equipment having the thermally expandable fire-resistant sheet according to any one of the above [4] to [10] mounted on at least a part of the fire prevention equipment.

### Advantageous Effects of Invention

According to the present invention, a thermally expandable composition and a thermally expandable fire-resistant sheet that can maintain good heat resistance can be provided, even in the event of warping of fire prevention equipment during a fire.

### Description of Embodiments

Hereinafter, the present invention will be described in detail.

### [Thermally Expandable Composition]

The thermally expandable composition of the present invention includes a matrix component and thermally expandable graphite, and the matrix component is at least one adhesive selected from the group consisting of a dry-solidifying adhesive, a chemical-reactive adhesive, and a heat-melt adhesive. The thermally expandable composition and the thermally expandable fire-resistant sheet formed therefrom can maintain good heat resistance, even in the event of warping of fire prevention equipment during a fire. The reason for this is not clear, but it is presumed to be as follows.

The thermally expandable composition and the thermally expandable fire-resistant sheet of the present invention include a specific adhesive, thereby enabling thermally expandable graphite to be firmly adhered. More specifically, in the event of a fire, the strength between the thermally expandable graphite in the fire-resistant insulating layer formed by the expansion of the thermally expandable heat-resistant sheet increases, and therefore the fire-resistant insulating layer can follow the deformation caused by warping of various fire prevention equipment, and as a result, good fire resistance can be maintained.

### <Matrix Component>

The thermally expandable composition of the present invention includes a matrix component. The thermally expandable graphite and an inorganic filler blended as required, as described later, are dispersed in the matrix component. The matrix component in the thermally expandable composition is an adhesive component, and a resin component with various structures. Furthermore, the matrix component is also the component to be a matrix in the thermally expandable fire-resistant sheet formed from the thermally expandable composition.

The matrix component is at least one adhesive selected from the group consisting of a dry-solidifying adhesive, a chemical-reactive adhesive, and a heat-melt adhesive. The adhesives have a high adhesion force to thermally expandable graphite, and can easily follow the warping of various fire prevention equipment during a fire.

The matrix component may be composed of a type of adhesive or a plurality of adhesives in combination.

### (Dry-Solidifying Adhesive)

Examples of the dry-solidifying adhesive include a solvent-based adhesive, an emulsion adhesive, and a synthetic rubber latex adhesive. When using these adhesives, the thermally expandable composition is a state of liquid, making it easier to increase the content of thermally expandable graphite, and also to cover around the thermally expandable graphite with the adhesive in the sheet when solidified. Consequently, the fire-resistant insulating layer, which is an expansion residue of the thermally expandable fire-resistant sheet, easily follows the warping of various fire prevention equipment.

The solvent-based adhesive is dissolved in an organic solvent in the thermally expandable composition. Therefore, when using the solvent-based adhesive, the thermally expandable composition will contain an organic solvent. In addition, solidification is possible by volatilizing the organic solvent.

Examples of the solvent-based adhesive include a vinyl acetate resin-based, vinyl acetate copolymer resin-based, rubber-based, acrylic resin-based, polyester-based, and silicone resin-based adhesives. The above silicon resin-based adhesive is a non-modified silicone resin-based adhesive.

In the present description, examples of the vinyl acetate copolymer resin-based adhesive include copolymers of vinyl acetate and monomers that can be copolymerized with vinyl acetate (e.g., α-olefins and (meth)acrylic acid esters), such as vinyl acetate-(meth)acrylic acid ester copolymers. The (meth)acrylic acid is a concept that includes both acrylic acid and methacrylic acid, and other similar terms are used in the same way. In addition, in the present description, examples of the above rubber-based adhesive include chloroprene, butadiene, styrene-butadiene, butadiene-acrylonitrile, isobutylene-isoprene, and ethylene-propylene, and above all, the chloroprene is preferable.

Among the solvent-based adhesives, polyester-based, acrylic resin-based, or silicone resin-based (non-modified) adhesives are preferable.

The emulsion adhesive is dispersed in a dispersion medium, preferably water, in the thermally expandable composition. When using the emulsion adhesive, the thermally expandable composition will contain a dispersion medium such as water.

Examples of the emulsion adhesive include a vinyl acetate resin-based, vinyl acetate copolymer resin-based, acrylic resin-based, aqueous polymer-isocyanate-based, and polyurethane-based adhesives, and above all, the vinyl acetate copolymer resin-based and polyurethane-based adhesives are preferable.

The synthetic rubber latex adhesive is dispersed in a dispersion medium, preferably water, in the thermally expandable composition. When using the synthetic rubber latex adhesive, the thermally expandable composition contains a dispersion medium such as water.

Examples of the synthetic rubber latex adhesive include chloroprene, butadiene, styrene-butadiene, butadiene-acrylonitrile, isobutylene-isoprene, and ethylene-propylene, and above all, the chloroprene is preferable.

When using the dry-solidifying adhesive, the thermally expandable composition will contain water or an organic solvent. A solid content of the thermally expandable composition in the case of using the dry-solidifying adhesive is, for example, 10 to 90% by mass, and preferably 30 to 70% by mass, from the viewpoint of enhancing the fire resistance of the thermally expandable fire-resistant sheet obtained, and the like.

### (Chemical-Reactive Adhesive)

Examples of the chemical-reactive adhesive include a curing agent-reactive, moisture-curing, and ultraviolet-reactive adhesives.

### <Curing Agent-Reactive>

The curing agent-reactive adhesive is an adhesive that can be cured by a curing agent, such as an epoxy resin-based (non-modified), rubber-modified epoxy resin-based, melamine resin-based, urea resin-based, and phenolic resin-based adhesives. The above epoxy resin-based (non-modified) refers to an epoxy resin other than a modified epoxy resin, and the above rubber-modified epoxy resin-based includes a reaction product of an epoxy resin and rubber, such as NBR epoxy resin-based which an epoxy resin reacted with acrylonitrile-butadiene rubber (NBR).

Any commonly used curing agent capable of curing the above exemplified resins may be used as a curing agent without particular restriction, but examples include a polyamine-based, imidazole-based, polymercaptan-based, and acid anhydride-based curing agents.

### <Moisture-Curing>

The moisture-curing adhesive is an adhesive that is cured when exposed to moisture in the air. The thermally expandable composition including the moisture-curing adhesive can be cured by moisture, enabling mixing at low temperatures, which significantly reduces the kneading load and effectively reduces the degradation of thermally expandable graphite. Thus, the generation of gas resulting from the degradation of thermally expandable graphite is reduced, thereby enabling the production of a thermally expandable fire-resistant sheet with an extremely good appearance and long length.

Examples of the moisture-curing adhesive include a cyanoacrylate-based, modified silicone resin-based, and silylated urethane-based adhesives, and are preferably the modified silicone resin-based or the silylated urethane-based adhesives, and more preferably the modified silicone resin-based adhesives.

### (Modified Silicone Resin-Based)

Examples of the modified silicone resin-based moisture-curing adhesive include polymers with a crosslinkable silyl group (crosslinkable silyl group-containing polymers).

The crosslinkable silyl group-containing polymer is preferably at least one selected from a crosslinkable silyl group-containing polyoxyalkylene polymer, a crosslinkable silyl group-containing acrylic polymer, and a crosslinkable silyl group-containing acrylic-modified polyoxyalkylene polymer.

Here, the modified silicone resin-based moisture-curing adhesive differs from the silylated urethane-based adhesive described later in that it does not have urethane bonds or urea bonds in its main chain.

The crosslinkable silyl group-containing polyoxyalkylene polymer is preferably a polymer with a crosslinkable silyl group in its molecule and a polyoxyalkylene as a main chain backbone, and more preferably a polymer with a polyoxyalkylene as a main chain backbone and crosslinkable silyl groups at a main chain end. Furthermore, the above polyoxyalkylene is preferably polyoxypropylene.

In addition, the crosslinkable silyl group-containing acrylic-modified polyoxyalkylene polymer is preferably a polymer with a crosslinkable silyl group in its molecule and (meth)acrylic-modified polyoxyalkylene as a main chain backbone, and more preferably a polymer with (meth)acrylic-modified polyoxyalkylene as a main chain backbone and a crosslinkable silyl group at a main chain end. Furthermore, the above (meth)acrylic-modified polyoxyalkylene is preferably (meth)acrylic-modified polyoxypropylene.

Examples of the crosslinkable silyl group-containing acrylic polymer include polymers with an acrylic polymer as a main chain backbone and one or more crosslinkable silyl groups in a molecular. Here, any conventionally known acrylic polymer can be used; and it is not particularly limited, if it is an acrylic polymer that one or more selected from acrylic monomers such as (meth)acrylic acid, a (meth)acrylic acid ester, (meth)acrylonitrile, and (meth)acrylamide are polymerized or copolymerized.

Examples of the crosslinkable silyl group include a group in which one or more reactive groups are bonded to a silicon atom. The reactive group is a group selected from a halogen atom, a hydrogen atom, a hydroxyl group, an alkoxy group, an acyloxy group, a ketoximate group, an amide group, an acid amide group, a mercapto group, a ketoxime group, an alkenyloxy group, and an aminooxy group, and when there is a plurality of reactive groups, the reactive groups may be the same or different. Above all, the reactive group is preferably the alkoxy group, and more preferably the methoxy group.

Namely, the crosslinkable silyl group is preferably an alkoxysilyl group. Examples of the alkoxysilyl group include trialkoxysilyl groups such as a trimethoxysilyl group, a triethoxysilyl group, a triisopropoxysilyl group, and a triphenoxysilyl group; dialkoxysilyl groups such as a dimethoxymethylsilyl group and a diethoxymethylsilyl group; and monoalkoxysilyl groups such as a methoxydimethylsilyl group and an ethoxydimethylsilyl group. Among these, the trialkoxysilyl groups or the dialkoxysilyl groups are preferable, and the trimethoxysilyl group or the dimethoxymethylsilyl group is more preferable.

### (Silylated Urethane-Based)

The silylated urethane-based moisture-curing adhesive is a polymer with at least one of a urethane bond or a urea bond in its main chain and a crosslinkable silyl group. The crosslinkable silyl group is preferably located at a main chain end. The crosslinkable silyl group is similar to those described in the modified silicone resin-based moisture-curing adhesive mentioned above.

In addition, it is preferable that the main chain of the silylated urethane-based moisture-curing adhesive has a polyoxyalkylene backbone and contains at least one of a urethane bond or a urea bond. The polyoxyalkylene is preferably polyoxypropylene.

### (Curing Catalyst)

The moisture-curing adhesive is preferably cured using a curing catalyst. Examples of the curing catalyst include organic tin compounds such as dibutyltin dilaurate, dibutyltin oxide, dibutyltin diacetate, dibutyltin phthalate, bis(dibutyltin lauric acid)oxide, dibutyltin bis(acetylacetonate), dibutyltin bis(monoester malate), stannous octoate, dibutyltin octoate, dioctyltin oxide, dibutyltin bis(triethoxysilicate), bis(dibutyltin bistriethoxysilicate)oxide, dibutyltin oxybisethoxysilicate, and 1,1,3,3-tetrabutyl-1,3-dilauryl oxycarbonyl-distannoxane, and organic titanate-based compounds such as tetra-n-butoxy titanate and tetraisopropoxytitanate. These curing catalysts may be used alone or in combination with two or more types.

A content of the curing catalyst is preferably 1 to 10 parts by mass based on 100 parts by mass of the matrix component, and more preferably 1 to 5 parts by mass.

### <Ultraviolet-Reactive>

The ultraviolet-reactive adhesive is an adhesive that is cured by irradiating an ultraviolet ray, including a radical polymerization-curing adhesive and a cationic polymerization-curing adhesive. Examples of the radical polymerization-curing adhesive include a compound with polymerizable double bonds such as a (meth)acryloyl group and a vinyl group. Examples of the cationic polymerization-curing adhesive include a compound with an epoxy group, and a compound with an oxetanyl group. The ultraviolet-reactive adhesive can be used in combination with a polymerization initiator as required.

### (Heat-Melt Adhesive)

The heat-melt adhesive is an adhesive that is non-flowing at room temperature but become flowable when heated, and is also sometimes referred to as a hot-melt adhesive. In addition, the heated heat-melt adhesive solidifies upon cooling again. Using the heat-melt adhesive in the thermally expandable composition allows the composition to fill the gaps easily, thereby enhancing fire resistance, because the fluidity of the heat-melt adhesive is increased, even in the event of warping of fire prevention equipment during a fire.

Examples of the heat-melt adhesive include a vinyl acetate resin-based, vinyl acetate copolymer resin-based, ethylene-vinyl acetate copolymer resin-based, rubber-based, acrylic resin-based, polyurethane-based, polystyrene-based, polyolefin-based, polyester-based, and polyamide-based adhesives. The above polystyrene-based adhesive is a polymer containing styrene-based monomer, and may also be a copolymer of a styrene-based monomer and an aliphatic monomer.

Among these, any one of an ethylene-vinyl acetate copolymer resin-based, polyurethane-based, polyester-based, and polystyrene-based adhesives is preferable.

When using the heat-melt adhesive, a tackifying resin may be used in combination. Examples of the tackifying resin include a rosin-based, terpene-based, petroleum resin-based, and coumarone resin-based resins.

For the thermally expandable composition of the present invention, any of a dry-solidifying adhesive, a chemical-reactive adhesive, and a heat-melt adhesive may be used, but the dry-solidifying adhesive or the heat-melt adhesive is preferable from the viewpoint of enhancing followability to the warping of fire prevention equipment during a fire.

In addition, the type of adhesive is not particularly limited, but preferable is at least one selected from the group consisting of a NBR epoxy resin-based, urea resin-based, melamine resin-based, phenolic resin-based, rubber-based, vinyl acetate resin-based, vinyl acetate copolymer resin-based, ethylene-vinyl acetate copolymer resin-based, acrylic resin-based, aqueous polymer-isocyanate-based, synthetic rubber-based latex-based, epoxy resin-based, cyanoacrylate-based, polyurethane-based, acrylic resin-based, silicone resin-based (non-modified), modified silicon resin-based, silylated urethane-based, polystyrene-based, and polyester-based adhesives.

A content of the matrix component in the present invention is preferably 20 to 80% by mass based on the total amount of the solid content of the thermally expandable composition, and more preferably 30 to 70% by mass, from the viewpoint of enhancing fire resistance.

### <Thermally Expandable Graphite>

The thermally expandable composition of the present invention includes thermally expandable graphite. The thermally expandable graphite is a conventionally known material that expands when heated, and because it expands to form a large volume of voids when heated, it prevents the spread of fire or extinguishes the fire when the fire-resistant sheet is ignited.

Thermally expandable graphite is produced by treating powders such as natural flake graphite, thermally decomposed graphite, and kish graphite with an inorganic acid and a strong oxidizing agent to form graphite intercalation compounds, and it is a type of a crystalline compound that retains its layered structure of carbon. Examples of the inorganic acid include concentrated sulfuric acid, nitric acid, and selenic acid. Examples of the strong oxidizing agent include concentrated nitric acid, a persulfate, perchloric acid, a perchlorate, a permanganate, a dichromate, a dichromate, and hydrogen peroxide. The thermally expandable graphite obtained through the above acid treatment may further be neutralized with ammonia, an aliphatic low-grade amine, an alkali metal compound, an alkaline earth metal compound, or the like.

A particle size of the thermally expandable graphite is preferably 20 to 200 mesh. The particle size of the thermally expandable graphite within the above range makes it easier to form a large volume of voids by expansion, thereby enhancing fire resistance. In addition, its dispersing ability in resin is enhanced.

An average aspect ratio of the thermally expandable graphite is preferably 2 or more, more preferably 5 or more, and even more preferably 10 or more. An upper limit of the average aspect ratio of the thermally expandable graphite is not particularly limited, but from the viewpoint of crack prevention of thermally expandable graphite, it is preferably 1,000 or less. The average aspect ratio of 2 or more of the thermally expandable graphite makes it easy to form a large volume of voids upon expansion, thereby enhancing flame retardance.

The average aspect ratio of thermally expandable graphite is determined by measuring the maximum dimension (major diameter) and minimum dimension (minor diameter) of 10 pieces of thermally expandable graphite, dividing the maximum dimension (major diameter) by the minimum dimension (minor diameter), and taking the average of these values. The major and minor diameters of thermally expandable graphite can be measured using a field emission scanning electron microscope (FE-SEM), for example.

The expansion onset temperature of thermally expandable graphite is not particularly limited, but preferably 100 to 160°C, and more preferably 120 to 150°C. The expansion onset temperature of thermally expandable graphite within the above range makes it easier to adjust the expansion onset temperatures of the thermally expandable composition and the thermally expandable fire-resistant sheet to 160°C or less, thereby making it easier to expand at the initial stage of a fire and form a fire-resistant insulating layer, to maintain good fire resistance for a long period of time.

The expansion onset temperature of the thermally expandable graphite is measured using the method described in Examples.

It is preferable that the expansion onset temperature of the thermally expandable graphite be lower than the decomposition onset temperature of the matrix component. This enhances the expandability of the thermally expandable fire-resistant sheet and increases the mechanical strength of the formed fire-resistant insulating layer, thereby enhancing the fire resistance.

The expansion onset temperature of the thermally expandable graphite is preferably 5°C or more lower than the decomposition onset temperature of the matrix component, and more preferably 10°C or more lower.

Here, the decomposition temperature of a matrix component refers to the decomposition onset temperature of the adhesive constituting the matrix component, and in the case of the chemical-reactive adhesive, it refers to the decomposition temperature of the adhesive after curing. The decomposition onset temperature indicates the temperature at which the matrix component begins to decompose and weight loss initiates, and is measured using a thermogravimetric analyzer under a condition of a dry air atmosphere at a heating rate of 10°C/min.

A content of the thermally expandable graphite is preferably 3 to 300 parts by mass based on 100 parts by mass of the matrix component, more preferably 10 to 200 parts by mass, and even more preferably 30 to 100 parts by mass. The content of the thermally expandable graphite within these lower limits or more can provide appropriate fire resistance for the thermally expandable fire-resistant sheet. In addition, the content of the thermally expandable graphite at or lower than these upper limits makes it possible to include a certain amount or more of the matrix component, thereby making it easier to cover the thermally expandable graphite with the adhesive, and follow the warping of fire prevention equipment.

### <Inorganic Filler>

The thermally expandable composition of the present invention may include an inorganic filler other than the thermally expandable graphite described above. The inorganic filler, during the formation of the fire-resistant insulating layer by expansion due to heating, increases heat capacity and inhibits heat transfer while acting as aggregates to enhance the strength of the expansion residues.

The inorganic filler usable in the present invention is not particularly limited, and examples include metal oxides such as alumina, zinc oxide, titanium oxide, calcium oxide, magnesium oxide, iron oxide, tin oxide, antimony oxide, and ferrite; metal carbonates such as calcium carbonate, zinc carbonate, strontium carbonate, and barium carbonate; metal hydroxides such as calcium hydroxide, magnesium hydroxide, aluminum hydroxide, and hydrotalcite; calcium salts such as calcium sulfate, gypsum fibers, calcium silicate; and other materials such as silica, diatomaceous earth, dawsonite, barium sulfate, talc, clay, mica, montmorillonite, bentonite, activated white clay, sepiolite, imogolite, sericite, glass fibers, glass beads, silica-based balloons, aluminum nitride, boron nitride, silicon nitride, carbon black, graphite, carbon fibers, carbon balloons, various metal powders, a metal phosphite, potassium titanate, magnesium sulfate, lead zirconate titanate, aluminum borate, molybdenum sulfide, silicon carbide, stainless steel fibers, and zinc borate. The inorganic filler may be used alone or in combination with two or more types. Among these, calcium carbonate, iron oxide, and aluminum hydroxide are preferable from the viewpoint of enhancing the fire resistance of the thermally expandable fire-resistant sheet, and it is preferable to use calcium carbonate and iron oxide or calcium carbonate and aluminum hydroxide in combination. The inorganic filler may be used alone or in combination with two or more types.

A content of the inorganic filler, from the viewpoint of enhancing fire resistance, is preferably 2 to 200 parts by mass based on 100 parts by mass of the matrix component, more preferably 10 to 150 parts by mass, and even more preferably 30 to 100 parts by mass.

### <Plasticizer>

The thermally expandable composition of the present invention may contain a plasticizer from the viewpoint of enhancing formability. Examples of the plasticizer include phthalate ester plasticizers such as di-2-ethylhexyl phthalate (DOP), dibutyl phthalate (DBP), diheptyl phthalate (DHP), diisodecyl phthalate (DIDP); fatty acid ester plasticizers such as di-2-ethylhexyl adipate (DOA), diisobutyl adipate (DIBA), dibutyl adipate (DBA); epoxidized ester plasticizers such as epoxidized soybean oil; adipic acid esters plasticizers such as an adipic acid ester, and an adipic acid polyester; trimellitic acid ester plasticizers such as tri-2-ethylhexyl trimellitate (TOTM), and triisononyl trimellitate (TINTM); and process oils such as mineral oil. The plasticizer may be used alone or in combination of two or more types.

When the thermally expandable composition contains the plasticizer, a content of the plasticizer is preferably 1 to 60 parts by mass and more preferably 5 to 50 parts by mass based on 100 parts by mass of the matrix component.

### (Other Components)

The thermally expandable composition in the present invention can contain any additive component other than those described above as required, within a range that does not impair the object of the present invention. A type of this additive component is not particularly limited, and various additives can be used. Examples of such additives include a lubricant, a shrinkage inhibitor, a crystal nucleating agent, a colorant (pigment, dye, and the like), an ultraviolet absorber, an antioxidant, an anti-aging agent, a fire retardant, a fire retardant auxiliary, an antistatic agent, a surfactant, a vulcanizing agent, a dispersant, and a surface treatment agent. The amount of the additive added can be appropriately selected within a range that does not impair the formability or the like, and the additive may be used alone or in combination of two or more types.

The thermally expandable composition of the present invention can be prepared by mixing a matrix component, thermally expandable graphite, an inorganic filler blended as required, and other additives. The mixing can be performed using known apparatuses such as a Banbury mixer, a kneader mixer, a mixing roll, a mortar machine, and a planetary mixer.

### [Thermally Expandable Fire-Resistant Sheet]

The thermally expandable fire-resistant sheet of the present invention is composed of the thermally expandable composition described above, and can be obtained by forming the thermally expandable composition as described later. Thus, the thermally expandable fire-resistant sheet will contain a matrix component, thermally expandable graphite, an inorganic filler blended as required, and other additives.

### <Expansion Onset Temperature>

The thermally expandable fire-resistant sheet of the present invention preferably has an expansion onset temperature of 160°C or less. The expansion onset temperature of 160°C or less allows the sheet to expand at the relatively low temperatures of the initial stage of a fire to form a fire-resistant insulating layer, making it easy to maintain good fire resistance for a long period of time.

The expansion onset temperature of the thermally expandable fire-resistant sheet is preferably 155°C or less, more preferably 150°C or less, and preferably 120°C or more.

The expansion onset temperature of the thermally expandable fire-resistant sheet is measured by the method described in Examples.

### <Elution Ratio>

The thermally expandable fire-resistant sheet of the present invention preferably has an elution ratio of 3% or less after being immersed in pure water at 60°C for 1 week. The elution ratio of 3% or less prevents the components constituting the thermally expandable fire-resistant sheet from being eluted, even when the thermally expandable fire-resistant sheet is placed in an environment of high-humidity or water contact, preventing the decrease in fire resistance. In addition, when the thermally expandable fire-resistant sheet is mounted on fire prevention equipment, contamination of the fire prevention equipment and resulting appearance defects can be prevented.

The above elution ratio of the thermally expandable fire-resistant sheet is preferably 2% or less, and more preferably 1% or less. The lower the elution ratio, the better, and the lower limit is 0%.

The elution ratio can be adjusted by appropriately selecting each component to be blended into the thermally expandable fire-resistant sheet. Specifically, compounds that are poorly soluble in water should be used for the matrix component, thermally expandable graphite, inorganic fillers blended as required, and other additives.

The elution ratio is measured by the method described in Examples.

### <Phosphorus Component>

The matrix component included in the thermally expandable fire-resistant sheet of the present invention is preferably free of phosphorus components. By using a matrix component that is free of phosphorus components, the amount of the phosphorus components in the thermally expandable fire-resistant sheet can be reduced. In addition, it is preferable that components other than the matrix component included in the thermally expandable fire-resistant sheet are free of phosphorus components, too. Namely, it is preferable that the thermally expandable fire-resistant sheet is free of phosphorus components.

The matrix component and the thermally expandable fire-resistant sheet may contain phosphorus components of impurity quantity that are unavoidably included. That is, in the present description, free of phosphorus components means that a content of the phosphorus components is 0.1% by mass or less, and preferably 0.01% by mass or less.

The free of phosphorus components enhances water resistance, ensuring an excellent expansion ratio, residue hardness, and shape retention after expansion, even after prolonged exposure to water. Here, phosphorus components refer to compounds containing phosphorus atoms. For the above matrix component, thermally expandable graphite, and inorganic fillers and other additives that may be blended as required, it is preferable not to use compounds containing phosphorus atoms.

### <Long Product>

The thermally expandable fire-resistant sheet of the present invention preferably has a length of 1 m or more. The length is a length in a longitudinal direction (MD direction) of the thermally expandable fire-resistant sheet. In addition, lengths of 1 m or more enhance productivity and preferably expand the range of applications.

A length of the thermally expandable fire-resistant sheet is preferably 5 m or more, more preferably 20 m or more, even more preferably 50 m or more, and still more preferably 100 m or more. Usually, the length of the thermally expandable fire-resistant sheet is 500 m or less.

In the present description, a MD direction is an abbreviation for Machine Direction, which is the same as the direction of flow of the composition during coating or the like, as described later, and is the longitudinal direction of the sheet. A TD direction is an abbreviation for Transverse Direction, which is the direction perpendicular to the MD direction.

In addition, the thermally expandable fire-resistant sheet of the present invention can reduce thickness variation even when the length is 1 m or more, to obtain long products with high dimensional accuracy.

In the present invention, it is presumed that since specific matrix components are used, the kneading load during kneading of the composition is small, thereby preventing the degradation of thermally expandable graphite, to reduce the generation of gas and thus to reduce a thickness variation. In particular, in the case of a liquid thermally expandable composition, it becomes easier to prevent the degradation of thermally expandable graphite.

Specifically, the thermally expandable fire-resistant sheet of the present invention can have a thickness of 0.5 mm or more and a thickness variation of 0.1 mm or less even if the length is 1 m or more, due to its specific composition.

Here, "thickness" of a thickness of 0.5 mm or more refers to an average thickness, and the average thickness refers to the average value obtained when measuring the thickness at 10 points at equal intervals in the longitudinal direction of the thermally expandable fire-resistant sheet. The thickness (average thickness) is preferably 0.8 mm or more, more preferably 1 mm or more, and preferably 5 mm or less. The measurement of the thickness shall be performed at the center in the width direction of the sheet.

The thickness variation is calculated as the absolute value A of the difference between the thickness obtained at each point when measuring the thickness at 10 points at equal intervals in the longitudinal direction of the thermally expandable fire-resistant sheet as described above and the above average thickness, and means the average value of the absolute values A of the 10 points. The thickness variation is preferably 0.1 mm or less, more preferably 0.08 mm or less, and even more preferably 0.05 mm or less.

In addition, the thickness variation is preferably 10% or less of the thickness (average thickness), and more preferably 5% or less.

The thermally expandable fire-resistant sheet of the present invention preferably exhibits a thermal shrinkage ratio of 1% or less in both the MD and TD directions even when the length is 1 m or more, and more preferably 0.5% or less. With such a low thermal shrinkage ratio, even when heat is applied in the production process of the wound body, for example, peeling due to shrinkage and dimensional shortage are prevented.

The thermal shrinkage ratio is calculated based on the following formula by cutting a 100 mm square evaluation sample, heat treating it at 60°C for 6 hours, and measuring the lengths before and after heat treatment.

Thermal Shrinkage Ratio (%) = 100×(Length Before Heat Treatment - Length After Heat Treatment)/Length Before Heat Treatment

The thermal shrinkage ratios in the MD direction and TD direction can be calculated using the above formula based on the lengths before and after heat treatment in each of MD and TD directions.

In addition, 10 or more of 100 mm square evaluation samples are prepared at equal intervals along the longitudinal direction of the sheet, and the thermal shrinkage ratios calculated from these evaluation samples are averaged to determine the thermal shrinkage ratio in the MD direction and the thermal shrinkage ratio in the TD direction.

The thermal shrinkage ratio can be adjusted by changing the contents of various components that constitute the thermally expandable fire-resistant sheet.

The thermally expandable fire-resistant sheet of the present invention can be a wound body that the sheet with a length of 1 m or more is wound. In particular, in the case of the thermally expandable fire-resistant sheet with a small thickness variation and high dimensional accuracy, it becomes easier to effectively produce a wound body of long sheet.

In addition, the wound body of the present invention is a thermally expandable fire-resistant sheet having a length of 1 m or more that is wound into a roll, for example, a thermally expandable fire-resistant sheet with a length of 1 m or more that is wound around a cylindrical winding core. The winding core may be omitted.

A width of the thermally expandable fire-resistant sheet is not particularly limited, but 0.005 to 2.0 m, for example.

Furthermore, as described later, it can be a wound body that the thermally expandable fire-resistant sheet with a substrate or a pressure-sensitive adhesive layer (multilayer sheet) is wound.

### <Method for Producing Thermally Expandable Fire-Resistant Sheet>

A method for producing the thermally expandable fire-resistant sheet of the present invention is not particularly limited, but is preferably a method for solidifying, drying, or curing the above thermally expandable composition. Using such a production method, the above described wound body with a length of 1 m or more can be obtained, for example.

Specifically, the thermally expandable composition should be applied to an arbitrary object, to solidify, dry, or cure the thermally expandable composition applied. The application of the thermally expandable composition should be performed by a known coating apparatus, a spray, or the like.

For example, when using the dry-solidifying adhesive described above as a matrix component, since the thermally expandable composition is a liquid state containing a solvent, the thermally expandable fire-resistant sheet can be formed by drying the thermally expandable composition applied and removing the solvent. Drying may be done by leaving it at normal temperature (about 25°C), but it is preferably done by heating. Heating is preferably performed at a temperature equal to or lower than the expansion onset temperature of the thermally expandable graphite, for example, at 50 to 160°C, preferably at about 60 to 120°C.

When using the above chemical-reactive adhesive as a matrix component, the thermally expandable fire-resistant sheet can be obtained by curing the thermally expandable composition applied. The curing method should be appropriately selected according to the type of a matrix component.

When using the curing agent-reactive adhesive, curing can proceed due to the mixing with a curing agent. Namely, after adding the curing agent to the thermally expandable composition, it may be applied to an arbitrary object and cured, or the thermally expandable composition can be made into a two-liquid type composed of a liquid with a curing agent and a liquid without a curing agent, each liquid of the two-liquid type thermally expandable composition is mixed, and applied to an arbitrary object and cured.

When using the moisture-curing adhesive, after applying it to an arbitrary object, it may be left in the atmosphere for a predetermined time. This allows the curing process to proceed due to the moisture in the air.

When using the ultraviolet-reactive adhesive, after applying it to an arbitrary object, it may be irradiated with ultraviolet rays to allow the curing process to proceed.

When using the heat-melt adhesive as a matrix component, the thermally expandable composition is heated to be melted, the melted thermally expandable composition should be applied to an arbitrary object. A heating temperature during melting is preferably performed at or lower than the expansion onset temperature of thermally expandable graphite, for example, 80 to 160°C, preferably 100 to 120°C. Then, after applying the thermally expandable composition, it can be cooled to, for example, room temperature (25°C), to solidify and obtain the thermally expandable fire-resistant sheet.

An object to which the thermally expandable composition is applied is not particularly limited, but may be a release-treated resin film, for example, and in the case of producing a thermally expandable fire-resistant sheet provided with a substrate, the substrate may be the object to which the thermally expandable composition is applied.

### <Substrate, Pressure-Sensitive Adhesive Layer, Separator>

The thermally expandable fire-resistant sheet of the present invention may be used as a single sheet, or it may be used as a multilayer sheet with other parts attached as appropriate. Specifically, the thermally expandable fire-resistant sheet may have a substrate or a pressure-sensitive adhesive layer on at least one side. For example, the thermally expandable fire-resistant sheet may have a substrate on one side (multilayer sheet of substrate/thermally expandable fire-resistant sheet), a pressure-sensitive adhesive layer on one side (multilayer sheet of pressure-sensitive adhesive layer/thermally expandable fire-resistant sheet), or a substrate on one side and a pressure-sensitive adhesive layer on the other side (multilayer sheet of pressure-sensitive adhesive layer/thermally expandable fire-resistant sheet/ substrate). Furthermore, the thermally expandable fire-resistant sheet may have a separator, for example, a separator on the surface of the pressure-sensitive adhesive layer.

### (Substrate)

The substrate is, for example, in the form of a woven fabric, nonwoven fabric, and film, and these are formed from a thermoplastic resin, a thermosetting resin, an elastomer resin, and the like, and among these, preferably formed from the thermoplastic resin. The substrate may also be formed from glass fibers, ceramic fibers, cellulose fibers, polyester fibers, carbon fibers, graphite fibers, thermosetting resin fibers, and the like.

The preferable form of the substrate is a film. A film with an internal cavity is also suitable as a film.

Specific examples of the thermoplastic resin include polyesters such as polyvinyl chloride, polyethylene terephthalate and polybutylene terephthalate; polyolefins such as polyethylene, polypropylene, poly(1-butene), and polypentene; and other resins such as polyvinyl acetate, polystyrene, an acrylic resin, an acrylonitrile-butadiene-styrene (ABS) resin, polycarbonate, polyamide, polyphenylene ether, and polyethersulfone.

Among the above, from the viewpoint of adhesion with the thermally expandable fire-resistant sheet, preferable thermoplastic resins are polyvinyl chloride, polyethylene terephthalate, polyolefin, and polyvinyl acetate. Furthermore, from the viewpoint of fire retardancy, the polyvinyl chloride is more preferable. In addition, a polyethylene terephthalate film with an internal cavity is also preferable.

Specific examples of the thermosetting resin include an epoxy resin, a urethane resin, a phenolic resin, an unsaturated polyester, an alkyd resin, a urea resin, and polyimide.

Specific examples of the elastomer resin include isoprene rubber, butadiene rubber, 1,2-polybutadiene rubber, styrene-butadiene rubber, chloroprene rubber, nitrile rubber, butyl rubber, ethylene-propylene rubber, chlorosulfonated polyethylene, acrylic rubber, epichlorohydrin rubber, silicone rubber, fluororubber, urethane rubber, polyisobutylene rubber, and butyl chloride rubber.

One or two or more of the above thermoplastic resin, thermosetting resin, and elastomer resin are used.

A substrate thickness is preferably 1 to 20% of the thickness of the multilayer sheet. The substrate thickness of 1% or more of the thickness of the multilayer sheet allows the substrate to easily support the thermally expandable fire-resistant sheet. The substrate thickness of 20% or less of the thickness of the multilayer sheet makes it easier to prevent the substrate from separating from the thermally expandable fire-resistant sheet and wrinkles on the substrate when the multilayer sheet is bent, and to maintain the appearance of the multilayer sheet well.

The substrate thickness is, for example, 10 to 500 µm, preferably 20 to 450 µm, and more preferably 30 to 400 µm. A thickness of the substrate of these lower limits or more can provide the necessary strength to support the thermally expandable fire-resistant sheet to the substrate. Also, the thickness of the upper limits or less can prevent the substrate from becoming thicker than necessary, making the multilayer sheet easier to be used in fire prevention equipment such as doors.

### (Pressure-Sensitive Adhesive Layer)

The pressure-sensitive adhesive layer may be a single layer consisting only of a layer made of a pressure-sensitive adhesive agent (hereinafter also referred to as a pressure-sensitive adhesive agent layer) or a pressure-sensitive adhesive double coated tape with pressure-sensitive adhesive agent layers on both surfaces of the substrate for the pressure-sensitive adhesive double coated tape, but it is preferable to consist of a pressure-sensitive adhesive agent layer. The pressure-sensitive adhesive double coated tape will constitute a pressure-sensitive adhesive layer when one of the pressure-sensitive adhesive agent layers is attached to the thermally expandable fire-resistant sheet or separator.

The pressure-sensitive adhesive agent constituting the pressure-sensitive adhesive agent layer is not particularly limited, and examples include an acrylic pressure-sensitive adhesive agent, a urethane pressure-sensitive adhesive agent, and a rubber pressure-sensitive adhesive agent. The thickness of the pressure-sensitive adhesive layer is not particularly limited, but is, for example, 10 to 500 µm, preferably 50 to 200 µm.

The substrate for the pressure-sensitive adhesive double coated tape is not particularly limited as long as it is a substrate used for a general pressure-sensitive adhesive double coated tape, but examples include non-woven fabrics, papers such as Japanese paper and the like, woven fabrics which are made of natural fiber, synthetic fibers and the like, resin films which are made of polyester, polyolefin, soft polyvinyl chloride, hard polyvinyl chloride, acetate and the like, and flat yarn cloths.

### (Separator)

As a separator, for example, one with a substrate for separator and a release layer provided on at least one side of the substrate for separator may be used. The release layer can be formed through the application of a release treatment to the substrate for separator. The separator may be arranged so that a side on which the release layer is provided is in contact with the pressure-sensitive adhesive layer. In addition, the separator may be one that both surfaces of the substrate for separator are subjected to release treatment to provide the release layers on both sides.

The release layer is not particularly limited, but is composed of an organic resin, for example. Examples of the organic resin that can be used as a known release agent include a fluororesin, a long-chain alkyl-containing resin, an alkyd resin, a polyolefin resin, and a rubber elastomer.

A resin film, paper, or the like, can be used as the substrate for separator. The resin film may be formed from a thermoplastic resin, a thermosetting resin, or an elastomer resin. As specific examples of the thermoplastic resin, the thermosetting resin, or the elastomer resin, those listed as resin films can be used, but the thermoplastic resin is preferable.

A separator thickness is preferably 0.3 to 10% of the thickness of the multilayer sheet. The separator thickness of 0.3% or more of the thickness of the multilayer sheet makes it easier to prevent damage of the separator. In addition, the separator thickness of 10% or less of the thickness of the multilayer sheet makes it easier to prevent the thermally expandable fire-resistant sheet from separating from the separator and wrinkles on the separator when the multilayer sheet is bent, and to maintain the appearance of the multilayer sheet well.

The separator thickness is, for example, 1 to 200 µm, preferably 2 to 150 µm, and more preferably 5 to 100 µm. Setting the thickness of the separator at these lower limits or more allows the separator to provide unbreakable strength. Also, setting it at these upper limits or less prevents the fire-resistant material from separating from the separator and wrinkles on the separator, when the multilayer sheet is bent.

### <Method for Producing Thermally Expandable Material-Containing Member>

In the present invention, also provided is a method for producing a thermally expandable material-containing member in that it is obtained by applying the above thermally expandable composition to the member, and then solidifying, drying, or curing the composition.

The above member is an object for which the thermally expandable composition is used, for example, preferably fire prevention equipment described later. Examples of the fire prevention equipment include fittings such as windows, paper screens, doors, sliding doors, and papered sliding doors; pillars; walls of reinforced concrete or the like; floors; and roofs.

The thermally expandable material is formed by solidifying, drying, or curing the thermally expandable composition. The solidifying, drying, or curing is as described in the method for producing the thermally expandable fire-resistant sheet. The expansion onset temperature, the elution ratio, and the amount of phosphorus components of the thermally expandable material are as similar range with the above thermally expandable fire-resistant sheet.

The thermally expandable material-containing member of the present invention can maintain good fire resistance even in the event of warping during a fire.

### [Fire Prevention Equipment]

In the present invention, the fire prevention equipment in which the above thermally expandable fire-resistant sheet is mounted on at least its part can be provided. Examples of the fire-prevention equipment include fittings such as windows, paper screens, doors, sliding doors, and papered sliding doors; pillars; walls of reinforced concrete or the like; floors; and roofs. The thermally expandable fire-resistant sheet of the present invention is mounted on a part of the fire prevention equipment and expand in the event of fire to reduce or prevent the entry of flames and smoke. Above all, the thermally expandable fire-resistant sheet is preferably used for the gaps between windows and window frames, gaps between doors and door frames, and the like, and even when such various fire prevention equipment warps and deforms during a fire, the thermally expandable fire-resistant sheet of the present invention easily follows the warping and continuously prevents the intrusion of flames and smoke for extended periods, maintaining fire resistance well for a long period of time.

### Examples

Hereinafter, the present invention will be specifically described with reference to examples, but the present invention is not limited to them.

The measurement and evaluation methods of each physical property are as follows.

### <Expansion Onset Temperature of Thermally Expandable Graphite>

In a rheometer ("Discovery HR-2", produced by TA Instruments), 0.5 g of a sample of thermally expandable graphite powder was placed on a sample stand and wrapped in aluminum foil to prevent the powder from falling out. A 25 mmφ cone plate was pressed against a base plate until the load reached 0 [N]. Then, from that state, the sample was heated by a Peltier heater at a constant heating rate (10°C/min) from a set temperature of 50°C, and the temperature when the load reached 0.1 N was designated as the expansion onset temperature.

### <Expansion Onset Temperature of Thermally Expandable Fire-Resistant Sheet>

A thermally expandable fire-resistant sheet was used as a sample, and the temperature was increased at a heating rate of 10°C/min using a rheometer ("Discovery HR 2", produced by TA Instruments), and the temperature at which the normal direction force rises was measured, and this was designated as the expansion onset temperature.

### <Decomposition Onset Temperature and Thermal Shrinkage Ratio of Matrix Component>

The decomposition onset temperature and the thermal shrinkage ratio of the matrix component were measured using the methods described in the description.

### <Thickness Variation>

The thickness was measured at 10 points equally spaced in the longitudinal direction of the thermally expandable fire-resistant sheet, and the average thickness was obtained by averaging these 10 thicknesses.

Then, the absolute value A of the difference between the thickness obtained at each point and the above average thickness was calculated when the thickness was measured at 10 points equally spaced in the longitudinal direction of the thermally expandable fire-resistant sheet, and the average of the absolute value A for the 10 points was designated as the thickness variation.

Then, if the thickness variation was 10% or less of the thickness (average thickness), it was evaluated as "A"; and if it was more than 10%, it was evaluated as "B".

### <Elution Ratio>

A test piece (10 g portion) prepared by cutting out the obtained thermally expandable fire-resistant sheet was immersed in 200 g of pure water; after one week passed in a sealed container at 60°C, the test piece was taken out; the immersed pure water was evaporated and dried; and the mass of resulting precipitates was measured. Using the value, the elution ratio was calculated according to the following formula, to serve as an index of water resistance. Elution ratio (%) = [(mass of precipitates)/(mass of test piece before immersion in pure water)]×100

### <Fire Resistance>

With respect to the thermally expandable fire-resistant sheet obtained, the fire resistance was evaluated in accordance with ISO 12472:2003. Specifically, a test body was prepared based on the drawing specified in ISO 12472:2003, heated according to the heating curve in ISO 834, subjected to a 7.5 kg load at 15 minutes after the start of heating, forced to deform, and observed after a total heating time of 60 minutes.

The following evaluation criteria were used.
A: Not penetrated to furnace; and
B: Penetrated to furnace.

Each component used in Examples and Comparative Example is as follows.

### <Matrix Component>

· Polyurethane-based: "TYFORCE HH-600" produced by DIC Corporation, heat-melt adhesive.
· Polyurethane-based: "VONDIC 1050B-NE" produced by DIC Corporation, dry-solidifying adhesive (emulsion adhesive).
· Chloroprene (rubber based): "SKYPRENE LA-710" produced by TOSOH CORPORATION, dry-solidifying adhesive (synthetic rubber latex adhesive).
· Polyester-based: "ARON MELT PES-111EE" produced by TOAGOSEI CO., LTD., heat-melt adhesive.
· Polyester-based: "ARON MELT PES310S30" produced by TOAGOSEI CO., LTD., dry-solidifying adhesive (solvent-based adhesive), solvent (toluene, methyl ethyl ketone), solid content 30%.
· Vinyl acetate copolymer resin-based: "VINYBLAN 1157" produced by Nissin Chemical Co., Ltd., dry-solidifying adhesive (emulsion adhesive).
· Vinyl acetate copolymer resin-based: "VINYBLAN A70J2M" produced by Nissin Chemical Co., Ltd., dry-solidifying adhesive (emulsion adhesive).
· Acrylic resin-based: "ACRYDIC 57-773-BA" produced by DIC Corporation, dry-solidifying adhesive (solvent-based adhesive), solvent (ethyl acetate, butyl acetate).
· Silicone resin-based (non-modified): "KR220L" produced by Shin-Etsu Silicones Inc., dry-solidifying adhesive (solvent-based adhesive), solvent (toluene, isopropyl alcohol).
· Ethylene-vinyl acetate copolymer resin-based (EVA-based): "V5774ETWR" produced by Mitsui Chemicals, Inc., heat-melt adhesive.
· Polystyrene-based: "FTR6100" produced by Mitsui Chemicals, Inc., heat-melt adhesive.
· Modified silicone resin-based: polymer with crosslinkable silyl groups, "MS polymer S-303" produced by KANEKA CORPORATION, moisture-curing adhesive.
· Modified silicone resin-based: polymer with crosslinkable silyl groups, "US-6150" produced by TOAGOSEI CO., LTD., moisture-curing adhesive.
· Modified silicone resin-based: polymer with crosslinkable silyl groups, "EXCESTAR-S6250" produced by AGC Inc., moisture-curing adhesive.
· Modified silicone resin-based: polymer with crosslinkable silyl groups, "SE-09" produced by Soken Chemical & Engineering Co., Ltd., moisture-curing adhesive.
· Modified silicone resin-based: polymer with crosslinkable silyl groups, "SILYL EST280" produced by KANEKA CORPORATION, moisture-curing adhesive.
· Silylated urethane-based: "SPUR3030" produced by Momentive Performance Materials Japan LLC.

### <Curing Catalyst>

· "NEOSTANN U220H" produced by Nitto Kasei Co., Ltd.

### <Thermally Expandable Graphite>

· "EXP-50S150" produced by Fuji Graphite Works Co., Ltd., expansion onset temperature 150°C.

### <Inorganic Filler>

· Iron oxide.
· Aluminum hydroxide (produced by SHIRAISHI CALCIUM KAISHA, LTD.).
· Calcium carbonate (produced by SHIRAISHI CALCIUM KAISHA, LTD.).

### [Example 1]

To produce the composition listed in Table 1, each component was mixed with a stirrer to obtain a thermally expandable composition. Then, the thermally expandable composition was heated to 120°C and melted, and applied to a release PET film with a roll coater, and the coated material was cooled to room temperature (25°C), causing it to solidify and form a thermally expandable fire-resistant sheet on the release PET film. Various evaluations were performed on the thermally expandable fire-resistant sheet (100 mm long, 1.5 mm thick, and 10 mm wide). The results of the evaluations are shown in Table 1.

### [Examples 4, 10, 11]

The thermally expandable fire-resistant sheets were obtained in a similar manner to Example 1 except that the compositions were changed to those listed in Table 1. Various evaluations were performed on the thermally expandable fire-resistant sheets.

### [Example 2]

To produce the composition listed in Table 1, each component was mixed with a stirrer to obtain a thermally expandable composition. The thermally expandable composition was then applied to a release PET film with a roll coater, and the coated material was dried at 120°C to vaporize the solvent, forming a thermally expandable fire-resistant sheet on the release PET film. Various evaluations were performed on the thermally expandable fire-resistant sheet (100 mm long, 1.5 mm thick, and 10 mm wide).

### [Example 3 and 5 to 9]

The thermally expandable fire-resistant sheets were obtained in a similar manner to Example 2 except that compositions were changed to those listed in Table 1. Various evaluations were performed on the thermally expandable fire-resistant sheets.

### [Examples 12 to 17]

To produce the composition listed in Table 1, each component was mixed at 25°C with a stirrer to obtain a thermally expandable composition. The thermally expandable composition was then applied to a release PET film with a roll coater, and the coated material was cured at 50°C, forming a thermally expandable fire-resistant sheet on the release PET film. Various evaluations were performed on the thermally expandable fire-resistant sheets (20 mm long, 1.5 mm thick, and 10 mm wide).

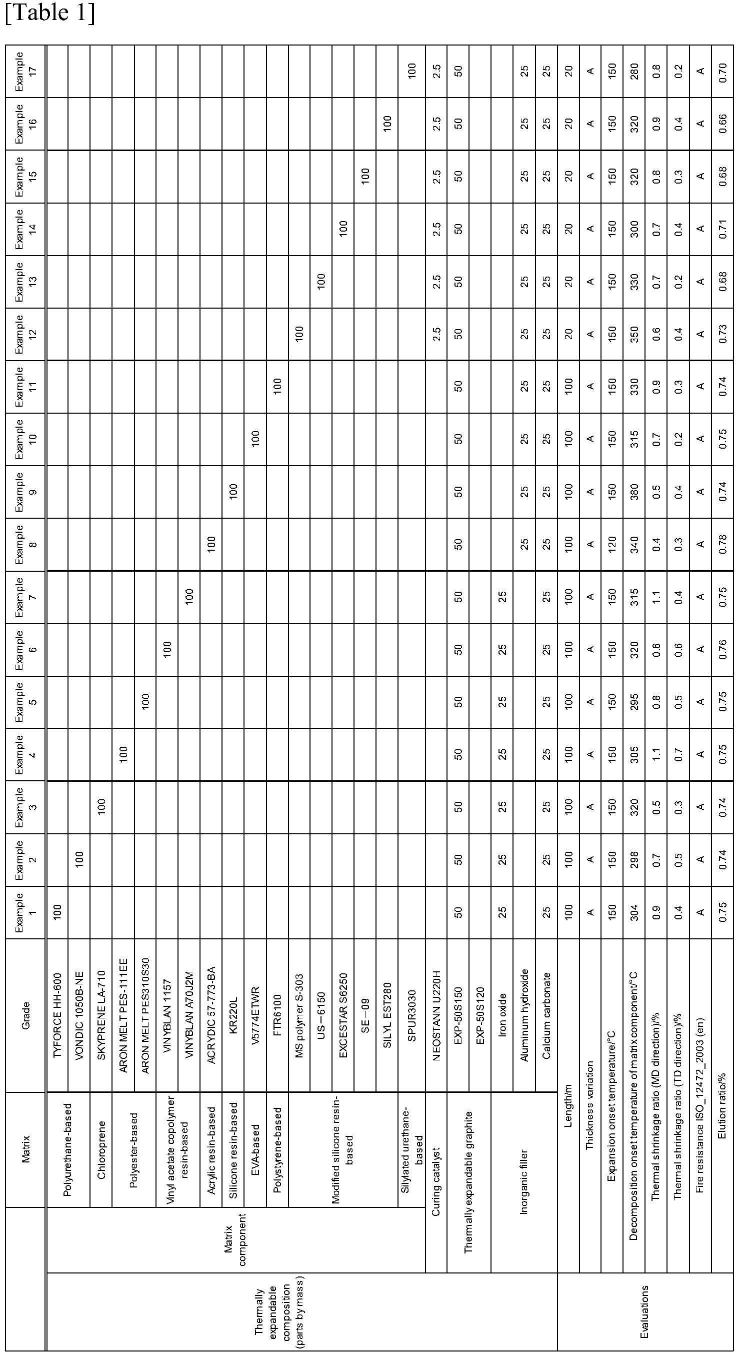

The thermally expandable compositions used in Examples contained a solvent when a dry-solidifying adhesive was used, but Table 1 only listed the solid contents of the thermally expandable compositions as the blended amounts.

The thermally expandable fire-resistant sheet of each Example was formed from the thermally expandable composition including a matrix component composed of a specific adhesive, and thermally expandable graphite, and all of them showed good fire resistance. These results showed that the thermally expandable fire-resistant sheet formed from the thermally expandable composition of the present invention could easily follow the warping of fire prevention equipment during a fire and maintain good fire resistance for a long period of time.

## Claims

1. A thermally expandable composition comprising a matrix component and thermally expandable graphite,
the matrix component being at least one adhesive selected from the group consisting of a dry-solidifying adhesive, a chemical-reactive adhesive, and a heat-melt adhesive.

2. The thermally expandable composition according to claim 1, further comprising an inorganic filler, wherein contents of the thermally expandable graphite and the inorganic filler are respectively 3 to 300 parts by mass and 2 to 200 parts by mass based on 100 parts by mass of the matrix component, and an expansion onset temperature of the thermally expandable graphite is lower than a decomposition onset temperature of the matrix component.

3. The thermally expandable composition according to claim 1 or 2, wherein the matrix component comprises at least one adhesive selected from the group consisting of a NBR epoxy resin-based, urea resin-based, melamine resin-based, phenolic resin-based, rubber-based, vinyl acetate resin-based, vinyl acetate copolymer resin-based, ethylene-vinyl acetate copolymer resin-based, acrylic resin-based, aqueous polymer-isocyanate-based, synthetic rubber latex-based, epoxy resin-based (non-modified), cyanoacrylate-based, polyurethane-based, silicone resin-based (non-modified), modified silicone resin-based, silylated urethane-based, polystyrene-based, and polyester-based adhesives.

4. A thermally expandable fire-resistant sheet formed from the thermally expandable composition according to claim 1 or 2.

5. The thermally expandable fire-resistant sheet according to claim 4, having an expansion onset temperature of 160°C or less.

6. The thermally expandable fire-resistant sheet according to claim 4, wherein an elution ratio is 3% or less after being immersed in pure water at 60°C for 1 week.

7. The thermally expandable fire-resistant sheet according to claim 4, wherein the matrix component is free of phosphorus components.

8. The thermally expandable fire-resistant sheet according to claim 4, comprising a substrate or a pressure-sensitive adhesive layer on at least one side of the sheet.

9. The thermally expandable fire-resistant sheet according to claim 4, being a wound body in which a thermally expandable fire-resistant sheet with a length of 1 m or more is wound.

10. The thermally expandable fire-resistant sheet according to claim 4, having a length of 1 m or more, a thermal shrinkage ratio of 1% or less in both MD and TD directions, a thickness of 0.5 mm or more, and a thickness variation of 0.1 mm or less.

11. A method for producing a thermally expandable fire-resistant sheet, comprising solidifying, drying, or curing the thermally expandable composition according to claim 1 or 2 to obtain a wound body with a length of 1 m or more.

12. A method for producing a thermally expandable material-containing member, comprising applying the thermally expandable composition according to claim 1 or 2 to a member, and then solidifying, drying, or curing the composition to obtain a thermally expandable material-containing member.

13. Fire prevention equipment having the thermally expandable fire-resistant sheet according to claim 7 mounted on at least a part of the fire prevention equipment.
